# EUROPÄISCHE PATENTANMELDUNG

(11) **EP 3 557 341 A1**
(43) Veröffentlichungstag der Anmeldung: **23.10.2019**
(21) Anmeldenummer: 18168158.6
(22) Anmeldetag: 19.04.2018
(51) Int. Cl.: G05B 17/02, G05B 19/418, G06F 9/50

(54) **VERFAHREN UND VERWALTUNGSEINRICHTUNG ZUR OPTIMIERUNG EINES INDUSTRIELLEN PROZESSES**

(71) Anmelder: Siemens Aktiengesellschaft, 80333 München (DE)
(72) Erfinder: Jehl, Gautier, 91058 Erlangen (DE)

(57) **Zusammenfassung**

Die Erfindung betrifft ein Verfahren und eine Verwaltungseinrichtung (DS) zur Optimierung eines industriellen Prozesses, insbesondere einer industriellen Automatisierungsaufgabe oder eines industriellen Verfahrens, vorgeschlagen, wobei der industrielle Prozess oder ein Teil davon mittels eines Simulationsmodells (VSM) abgebildet wird und das Simulationsmodell (VSM) mittels einer Ausführungsumgebung (SC) ausgeführt wird, wobei der Ausführungsumgebung (SC) aktuelle Zustandsparameter (ZP) des industriellen Prozesses zur Verfügung gestellt werden, und wobei bei der Ausführung des Simulationsmodells (VSM) optimierte Steuerungsparameter (OP) für den industriellen Prozess ermittelt und zur Optimierung des industriellen Prozesses verwendet werden. Dabei wird mittels einer Verwaltungseinrichtung (DS) ein Simulationsauftrag (SA) erstellt und eine Anzahl potentieller Vertragspartner zur Ausführung angeboten, wobei der Simulationsauftrag (SA) das Simulationsmodell (VSM) und die Zustandsparameter (ZP) umfasst, wobei zumindest ein Vertragspartner den Simulationsauftrag (SA) lädt und mittels einer eigenen Ausführungsumgebung (SC) das Simulationsmodell (VSM) unter Verwendung der Zustandsparameter (ZP) ausführt und als Resultat optimierte Steuerungsparameter (OP) an die Verwaltungseinrichtung (DS) zurück übermittelt, wonach die Verwaltungseinrichtung (DS) die optimierten Steuerungsparameter (OP) zur Optimierung dem industriellen Prozess zur Verfügung stellt. Durch dieses Verfahren ist es möglich, die Simulationsaufgabe einer formal unbeschränkten Anzahl von Vertragspartnern bzw. potentiellen Vertragspartnern zur Ausführung anzubieten, wodurch auf eine praktisch unbegrenzte Hardware-Basis je nach aktuellem Bedarf zurückgegriffen werden kann.

## Beschreibung

Die Erfindung betrifft ein Verfahren zur Optimierung eines industriellen Prozesses gemäß dem Oberbegriff des Patentanspruchs 1, und eine Verwaltungseinrichtung zur Optimierung eines industriellen Prozesses gemäß dem Oberbegriff des Patentanspruchs 10.

Industrielle Verfahren und Prozesse, insbesondere Fertigungsvorgänge in der Automatisierungstechnik oder automatisierte Verfahren für die chemische oder pharmakologische Industrie und dgl., können durch Simulationsmodelle abgebildet werden. Solche Simulationsmodelle werden verwendet, um das Verhalten von Maschinen, Produktionseinheiten oder Fertigungsanlagen zu simulieren und somit vorherzusagen. Es ist dabei ein beständiges Bestreben der Industrie, die Effizienz der Verfahren und Prozesse zu verbessern bzw. zu optimieren, wobei also beispielsweise Energieeffizienz, Materialdurchfluss, Emissionen, Wartungskosten oder auch (wahrscheinliche) Fehler und Schäden betrachtet werden.

Heutige Simulationen unterliegen ihren eigenen natürlichen Beschränkungen, denn sie sind immer ein Kompromiss zwischen dem Detaillierungsgrad der simulierten Parameter und der verfügbaren Rechenleistung bzw. Rechenzeit, in der ein Resultat vorliegen muss. Grundsätzlich erfordert ein wachsender Detaillierungsgrad höhere Investitionen in Computer-Hardware, um eine Simulation ausreichend schnell durchzuführen - anderenfalls steigt die erforderliche Rechenzeit. Umgekehrt bedingt eine Reduzierung der Rechenzeit (Ausführungsdauer der Simulation) und/oder eine Reduzierung der Hardwarekosten oft eine (ungewünschte) Reduzierung des Detaillierungsgrades der Simulation.

Heutzutage werden Simulationen und Simulationsmodelle hauptsächlich genutzt, um Maschinen, Prozesse oder Fabrikationen (allgemein: Automatisierungsanordnungen) zu optimieren, wobei durch die Simulation optimierte Betriebsparameter, die im Folgenden Steuerungsparameter genannt werden sollen, im besten Fall während einer laufenden Produktion errechnet oder optimiert werden. Dies hat zum Hintergrund, dass beispielsweise wegen der die Flexibilität einer Produktion die Nutzung von Maschinen und dgl. Änderungen unterworfen sein kann. Daher ist eine exakte, umfassende Planung zum Projektierungszeitpunkt nicht möglich. Wegen der Komplexität von Simulationen sind hohe Investitionen für insbesondere Hardware, aber auch Software-Lizenzen etc. erforderlich. Der damit verbundene Aufwand, insbesondere die Kosten, sind ein Hauptgrund dafür, dass sich eine produktionsbegleitende Simulation mit einer beständigen Optimierung der Steuerungsparameter noch nicht überall durchgesetzt hat.

Eine typische industrielle Automatisierungsanordnung besteht aus einer Produktionsanlage und einer industriellen Steuerung, insbesondere einer speicherprogrammierbaren Steuerung (PLC - Programmable Logic Controller) oder dgl. Die industrielle Produktionseinrichtung erfasst mittels Sensoren Zustandsparameter (Drücke, Temperaturen, Wegstrecken etc.), die an die industrielle Steuerung übertragen werden, wobei die industrielle Steuerung Befehle für Aktoren erstellt, die in der industriellen Fertigungseinrichtung angeordnet sind und die Produktion beeinflussen. Solche Aktoren können Motoren, Heizungen, Ventile und dgl. sein.

Die Informationen von den Sensoren werden also zu der industriellen Steuerungseinrichtung übertragen, wobei die Steuerung damit Zustandsinformationen über die industrielle Einrichtung erhält oder aus den verschiedenen Sensorwerten Zustandsparameter errechnet. Aus diesen Zustandsparametern erzeugt die Logik der Steuerung Steuerungsparameter, aus denen die entsprechenden Befehle für die Aktoren derart erzeugt werden, dass die industrielle Einrichtung ihre Aufgabe erfüllt.

Einige oder alle relevanten Zustandsparameter können an eine Simulationseinrichtung gesendet werden, in der das zu der zu steuernden industriellen Einrichtung passende Simulationsmodell ausgeführt wird. Dabei wird das Simulationsmodell in der Regel mehrfach ausgeführt, um optimale Steuerungsparameter zu finden, die von der Steuerung zu der industriellen Einrichtung gesendet werden und die von der Steuerungseinrichtung zur Ansteuerung der Aktoren verwendet werden sollen. Dabei ist es möglich, die interessierenden Größen der industriellen Einrichtung zu überwachen und zu optimieren, insbesondere den Energiekonsum, den Materialdurchfluss, die Emissionen (insbesondere CO₂), Qualität etc. Das optimierte Resultat der Simulation wird dann an die industrielle Steuerung zurückübertragen, die diese Resultate zur Optimierung der industriellen Position oder des industriellen Prozesses verwendet.

Da solche Simulationen zum Einen sehr rechenaufwändig sind, zum Anderen aber wegen des Interesses, die Optimierungen eines industriellen Prozesses schnell durchführen zu können, verlassen sich die meisten Anwender auf eine Anzahl lokaler Recheneinheiten (einzelne Server oder sog. Server-Racks). Wie bereits angesprochen, führt das zu hohen Investitionen in Computer-Hardware und damit verbundene Kosten (Infrastruktur, Sicherheit etc.), wobei darüber hinaus auch jede ausführende Maschine zur Ausführung des Simulationsmodells entsprechende Software-Lizenzen für die Ausführungsumgebung haben muss. Eine Alternative ist ein sog. "Cloud Computing", wobei in einem Rechenzentrum entsprechende Ressourcen gemietet werden. Eine solche Lösung begibt jedoch den Kunden in eine Abhängigkeit von dem entsprechenden Service-Provider, wobei die Datensicherheit von der Datensicherheit des Service-Providers abhängt. Zudem kann ein Ausfall der Verfügbarkeit des ausgewählten Service-Providers bzw. von dessen Infrastruktur schwerwiegende Konsequenzen nach sich ziehen.

Es ist also eine Aufgabe der vorliegenden Erfindung, die bekannten Verfahren zum Simulieren industrieller Vorgänge zu verbessern und dabei insbesondere die Sicherheit, die Skalierbarkeit und die Verfügbarkeit der Simulationen zu erhöhen.

Es ist dabei eine Kernidee der erfindungsgemäßen Lösung dieser Aufgabe, dass eine sichere Möglichkeit geschaffen wird, die Ausführung des Simulationsmodells an eine Vielzahl unabhängiger Recheneinheiten zu verteilen, die dem Nutzer bzw. Auftraggeber der Simulation ihre Rechenleistung auf eine einfache und sichere Weise zur Verfügung stellen können. Dabei wird insbesondere eine Plattform geschaffen, die das auszuführende Simulationsmodell einer Vielzahl von Vertragspartnern gegen eine Vergütung zum Ausführen anbietet und die bei der Ausführung des Simulationsmodels jeweils erzeugten Resultate wieder in Empfang nimmt, verarbeitet und der industriellen Steuerung zur Optimierung des industriellen Prozesses übergibt.

Die Aufgabe wird insbesondere durch das Verfahren gemäß dem Patentanspruch 1 und durch die Verwaltungseinrichtung gemäß dem Patentanspruch 10 gelöst.

Dabei wird ein Verfahren zur Optimierung eines industriellen Prozesses, insbesondere einer industriellen Automatisierungsaufgabe oder eines industriellen Verfahrens, vorgeschlagen, wobei der industrielle Prozess oder ein Teil davon mittels eines Simulationsmodells abgebildet wird und das Simulationsmodell mittels einer Ausführungsumgebung ausgeführt wird, wobei der Ausführungsumgebung aktuelle Zustandsparameter des industriellen Prozesses zur Verfügung gestellt werden, und wobei bei der Ausführung des Simulationsmodells optimierte Steuerungsparameter für den industriellen Prozess ermittelt und zur Optimierung des industriellen Prozesses verwendet werden. Dabei wird mittels einer Verwaltungseinrichtung ein Simulationsauftrag erstellt und eine Anzahl potentieller Vertragspartner zur Ausführung angeboten, wobei der Simulationsauftrag das Simulationsmodell und die Zustandsparameter umfasst, wobei zumindest ein Vertragspartner den Simulationsauftrag lädt und mittels einer eigenen Ausführungsumgebung das Simulationsmodell unter Verwendung der Zustandsparameter ausführt und als Resultat optimierte Steuerungsparameter an die Verwaltungseinrichtung zurück übermittelt, wonach die Verwaltungseinrichtung die optimierten Steuerungsparameter zur Optimierung dem industriellen Prozess zur Verfügung stellt. Durch dieses Verfahren ist es möglich, die Simulationsaufgabe einer formal unbeschränkten Anzahl von Vertragspartnern bzw. potentiellen Vertragspartnern zur Ausführung anzubieten, wodurch auf eine praktisch unbegrenzte Hardware-Basis je nach aktuellem Bedarf zurückgegriffen werden kann.

Die Aufgabe wird außerdem durch eine Verwaltungseinrichtung für eine industrielle Automatisierungsanordnung zur Optimierung eines industriellen Prozesses gelöst, wobei vorgesehen ist, dass das Simulationsmodell mittels einer Ausführungsumgebung ausgeführt wird und dabei aktuelle Zustandsparameter des industriellen Prozesses verwendet werden, und wobei als Resultat der Ausführung des Simulationsmodells optimierte Steuerungsparameter für den industriellen Prozess ermittelt und zur Optimierung des industriellen Prozesses vorgesehen sind. Dabei ist die Verwaltungseinrichtung dazu eingerichtet, einen Simulationsauftrag zu erstellen und einer Anzahl potentieller Vertragspartner zur Ausführung anzubieten, wobei der Simulationsauftrag zumindest das Simulationsmodell und die zu verwendenden Zustandsparameter umfasst, und dass die Verwaltungseinrichtung zum Empfang der von einem Vertragspartner mittels einer eigenen Ausführungsumgebung durch Ausführung des Simulationsmodells unter Verwendung der ermittelten Zustandsparameter errechneten optimierten Steuerungsparameter eingerichtet ist, wobei die Verwaltungseinrichtung weiter dazu eingerichtet ist, die Anwendung der optimierten Steuerungsparameter auf den industriellen Prozess zu initiieren. Durch eine solche Verwaltungseinrichtung können die bereits anhand des Verfahrens erläuterten Vorteile realisiert werden.

Vorteilhafte Ausgestaltungen des erfindungsgemäßen Verfahrens und auch der erfindungsgemäßen Verwaltungseinrichtung sind in den abhängigen Patentansprüchen angegeben. Die dabei verzeichneten Merkmale und deren Vorteile können sowohl einzeln, als auch in sinnfälliger Kombination miteinander realisiert werden. Vorteilhafte Ausgestaltungen des erfindungsgemäßen Verfahrens sind sinngemäß auch auf die erfindungsgemäße Verwaltungseinrichtung anzuwenden, und umgekehrt.

In einer vorteilhaften Ausgestaltung wird der Simulationsauftrag mittels eines öffentlichen Netzwerkes, insbesondere des Internets, einer formal nicht beschränkten Menge potentieller Vertragspartner zur Ausführung gegen eine Vergütung angeboten. Der Simulationsauftrag enthält dabei vorteilhaft Informationen über die in Aussicht gestellte Vergütung und über technische Bedingungen, die für die erfolgreiche Ausführung des Auftrages erfüllt sein müssen, insbesondere hinsichtlich der erforderlichen Software (Ausführungsumgebung), der erforderlichen Hardware-Ausstattung und erforderliche Sicherheitsmerkmale (z.B. Virenschutz, Firewalls, Zugriffsberechtigungen etc.). Ein besonders wichtiges Kriterium ist die maximale Ausführungsdauer, also die Angabe eines relativen oder absoluten Zeitpunktes, bis zu dem ein Resultat vorliegen muss. Bei zyklischen Optimierungsaufgaben kann auch eine mittlere oder maximale Response-Zeit vorgegeben werden.

In einer besonders vorteilhaften Variante verwendet oder umfasst die Verwaltungseinrichtung eine Art "App-Store", womit nicht nur der Simulationsauftrag angeboten wird, sondern in einer vorteilhaften Variante auch die für die Ausführung erforderliche Software (Ausführungsumgebung, Framework) spezifiziert oder sogar zum Laden angeboten wird. Wahlweise kann der Simulationsauftrag auch die erforderliche Software und/oder dafür erforderliche Lizenz umfassen, so dass von einem potentiellen Vertragspartner nur ein komplettes Paket geladen werden muss.

Das geschilderte Verfahren zur Vergabe, Übermittlung und Ergebnis der Ergebnisübermittlung stellt eine Abfolge von Transaktionen dar, die in einer vorteilhaften Ausgestaltung mittels des Blockchain-Verfahrens abgesichert wird. Durch das Blockchain-Verfahren können nicht nur die entsprechenden Datenübertragungen verschlüsselt werden, sondern es können auch Manipulationen durch Angreifer verhindert werden, so dass das dem Simulationsauftrag inhärente Know-How geschützt ist. Für den Know-How-Schutz kann weiterhin das Simulationsmodell in einer anonymisierten Form gespeichert sein, was bedeutet, dass beispielsweise Variablen-Namen und Parameterbezeichnungen anonymisiert werden, was ein Ausspähen von Betriebsgeheimnissen erschwert. Weiterhin kann das Simulationsmodell, welches in dem Simulationsauftrag enthalten ist, auch derart verschlüsselt sein, dass nur eine entsprechend ausgestaltete Ausführungsumgebung das Simulationsmodell ausführen kann. Selbstverständlich ist es von Vorteil, wenn auch die Rückübermittlung der Resultate, also die optimierten Zustandsparameter oder Steuerungsanweisungen, anonymisiert oder - besser - verschlüsselt werden. Durch ein Blockchain-Verfahren kann die Simulationsaufgabe auch gegliedert und auf eine Anzahl Clients verteilt werden, was die Datensicherheit weiter erhöht.

Das geschilderte Verfahren umfasst vorteilhaft auch einen technischen und logischen Workflow für eine monetäre Vergütung. Dies bedeutet, dass mit dem Simulationsauftrag eine der erforderlichen Rechenleistung entsprechende Vergütung in Aussicht gestellt wird, wobei nach erfolgreichem Abschluss der Transaktion, insbesondere nach einer erfolgreichen Rückübermittlung der optimierten Zustandsparameter und einer Überprüfung derselben durch die Verwaltungseinrichtung, die entsprechende Vergütung angewiesen wird. Dazu kann ebenfalls vorteilhaft ein Block-Chain-Verfahren und in einer vorteilhaften Variante auch eine Krypto-Währung verwendet werden. Es kann aber auch ein eigenes Bonus- oder Punkte-System für die Vergütung geschaffen werden.

Es ist wesentlich für die Verfügbarkeit, dass der Simulationsauftrag einer Mehrzahl potentieller Vertragspartner angeboten wird. Darüber hinaus ist es von Vorteil, wenn ein- und derselbe Simulationsauftrag auch tatsächlich an eine Mehrzahl an Vertragspartner zur Ausführung übergeben wird, weil dadurch das Ausfallrisiko sinkt und darüber hinaus eine gegenseitige Überprüfung der simultan errechneten optimierten Zustandsparameter möglich wird. Außerdem ist es möglich, unterschiedliche Facetten einer Simulation unterschiedlichen Vertragspartnern bzw. Ausführungseinheiten zu vergeben, wodurch insgesamt eine kürzere Reaktionszeit erreicht werden kann.

Es ist in einer vorteilhaften Variante möglich, dass die Verwaltungseinrichtung Statistiken über die Zusammenarbeit mit einzelnen Vertragspartnern führt, wobei beispielsweise nachfolgende Aufträge bevorzugt an besonders schnell oder zuverlässig oder genau arbeitende Einrichtungen vergeben werden können, und wobei Ausführungseinheiten oder Vertragspartner, mit denen eine negative Erfahrung vorliegt, von weiteren Aufträgen ausgeschlossen werden können.

In einer Variante werden das auszuführende Simulationsmodell als auch die der Simulation zugrunde zu legenden Zustandsparameter in einem Auftragspaket zusammengefasst und an die Auftragnehmer übermittelt. Es kann jedoch durchaus Sinn ergeben, die Zustandsparameter erst zur Ausführungszeit des Simulationsmodells "online" nachzuladen; in einem solchen Fall umfasst der Simulationsauftrag beispielsweise einen Hyperlink oder eine andere Adressinformation zum Zugriff auf die aktuellen Zustandsparameter. Sofern bereits das Simulationsmodell bei einem Vertragspartner vorliegt, beispielsweise aus einem vergangenen Auftrag, ist es damit auch möglich, für Folgeaufträge nur aktualisierte Zustandsparameter zur Verfügung zu stellen, was die erneute Übertragung des Simulationsmodells und ggf. auch der Software für die Ausführungsumgebung erspart.

Ein Ausführungsbeispiel des erfindungsgemäßen Verfahrens wird nachfolgend anhand der Zeichnungen erläutert; es dient gleichzeitig auch zur Erläuterung einer erfindungsgemäßen Verwaltungseinrichtung.

Dabei zeigen:
- Figur 1: in schematischer Darstellung ein typisches Setup für eine Optimierung einer industriellen Automatisierungsanordnung, und
- Figur 2: in einer detaillierteren schematischen Darstellung den Informationsfluss zwischen den beteiligten Instanzen für die Optimierung des industriellen Prozesses.

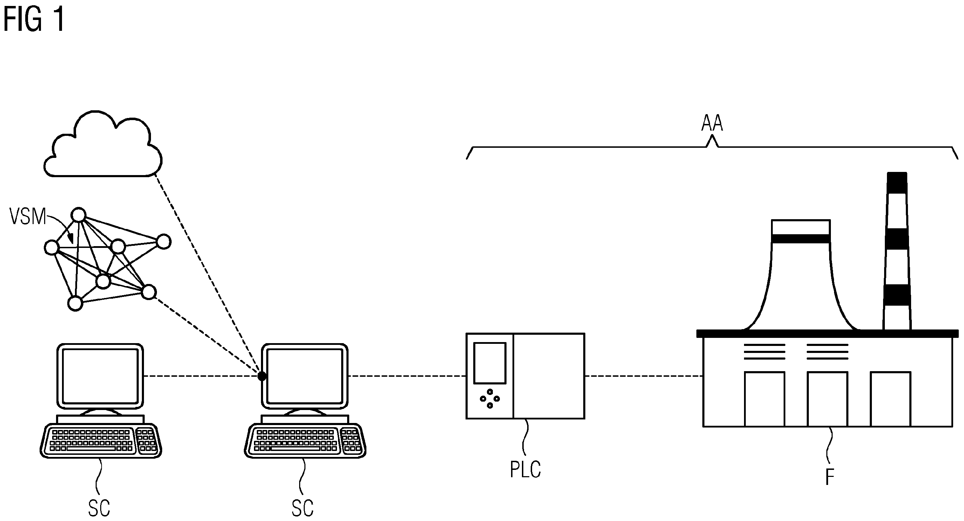

In der Figur 1 ist schematisch eine industrielle Automatisierungsanordnung AA gezeigt, welche aus einer digitalen Fabrik F besteht, in welcher die zu steuernde Produktion bzw. der zu steuernde industrielle Prozess bzw. das zu steuernde industrielle Verfahren abläuft, und eine industrielle Steuerung PLC, in der die Werte der Sensoren und somit Zustandsparameter der Fabrik F verarbeitet werden und Befehle oder Steuerungsparameter für die Fabrik F bzw. dortige Aktoren erzeugt werden. Dabei können die Steuerungsparameter entweder direkt an die Fabrik F übertragen und dort zur Steuerung des industriellen Vorgangs verwendet werden, oder die Steuerungsparameter können durch einen separaten Rechenschritt in Befehle für Aktoren umgesetzt werden, die dann ebenfalls zur Steuerung des industriellen Vorgangs verwendet werden.

Die Zustandsparameter aus der Fabrik F können an Rechner SC (Simulation Client) verwendet werden, wobei die Rechner SC ein Simulationsmodell VSM verwenden, um zumindest einen Teilaspekt der Fabrik F zu simulieren, wobei die aktuellen Zustandsparameter von der Steuerung PLC geladen werden und wobei bei der Ausführung des Simulationsmodels VSM optimierte Steuerungsparameter errechnet und an die Steuerung PLC übertragen und dort für die Optimierung des industriellen Vorgangs verwendet werden. Die in der Figur 1 dargestellte Konstellation umfasst gegenüber gebräuchlicher Anordnungen weiterhin eine Verwaltungseinrichtung (nicht dargestellt), die dazu eingerichtet ist, das Simulationsmodell VSM und Zustandsparameter der Fabrik F einer Anzahl externer Recheneinrichtungen SC im Rahmen eines Simulationsauftrages verfügbar zu machen.

Das damit geschaffene System verwendet vorteilhaft die Möglichkeiten der Blockchain-Technologie, um die Rechenarbeit zur Optimierung des industriellen Verfahrens der Fabrik F an Dritte über das Internet zu verteilen und die Teilnehmer gemäß ihrem Beitrag zu belohnen. Dabei wird eine sichere Ausführungsumgebung geschaffen, die es Eigentümern von Computern, Servern oder allgemein "Rechenleistung" ermöglicht, ihre Rechenleistung zu vermieten oder zu verkaufen, wobei die Simulation zur Optimierung des industriellen Vorgangs durchgeführt wird.

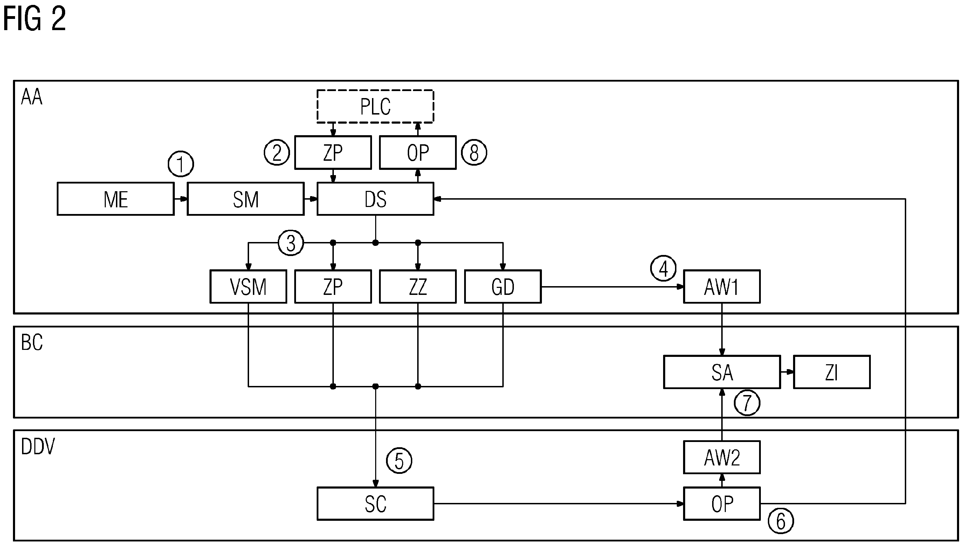

In der Figur 2 sind schematisch die Teilnehmer des vorgeschlagenen Verfahrens und die dabei auftretenden Informationsflüsse dargestellt. Dabei sind drei verschiedene Ebenen dargestellt. Die Ebene AA (Automatisierungsanordnung) umfasst die industrielle Steuerung PLC, die Verwaltungseinrichtung DS (Dispatching Server) und die dazugehörigen Daten und Einrichtungen. Die Ebene BC (Blockchain) stellt eine Vermittlungsebene dar, bei der die Simulierungsaufträge SA ("Smart Contract") und die entsprechenden Zahlungsinformationen ZI in Form einer Abfolge von abgesicherten Transaktionen verwaltet werden. Schließlich stellt die Ebene DDV (Dezentrale Datenverarbeitung) die logische Ebene der Vertragspartner dar, insbesondere die Ausführungseinheiten SC (Simulation Client) und die dabei übermittelten Informationen und Daten. Die Datenverbindungen (z.B. Feldbus-Systeme) zwischen der industriellen Steuerung PLC und einer Fabrik F sind aus Gründen der Übersichtlichkeit in der Figur 2 nicht dargestellt.

Im Einflussbereich der industriellen Automatisierungsanordnung AA, also beispielsweise im produzierenden Unternehmen oder für die ausführende Fabrik F, bereitet ein Simulations-Ingenieur mittels eines Modell-Editors ME ein Simulationsmodell SM der Maschine, Fabrik F oder eines spezifischen Subsystems für die Optimierung vor; dieser Schritt ist mit der Ziffer "1" in der Figur 2 gekennzeichnet. Das Simulationsmodell SM wird verschlüsselt und an die Verwaltungseinrichtung DS übertragen bzw. dieser zum Abruf verfügbar gemacht.

Die Verwaltungseinrichtung DS (Dispatching Server) ist mit einer oder mehreren Steuerungseinrichtungen PLC der zu steuernden Maschine oder Fabrik F verbunden und liest Zustandsparameter ZP (Status von Eingängen, Sensoren, Ausgängen, wichtigere Variableninhalte etc.) aus der Steuerung PLC bzw. den Steuerungen PLCs aus. Dazu können Standardprotokolle wie z.B. OPC UA, S7, SHM oder dgl. verwendet werden. Diese Informationen stellen eine Art Snapshot der verschiedenen Elemente der betrachteten Fabrik F, Maschine oder dgl. zu einem bestimmten Zeitpunkt dar. In einer alternativen Ausführungsform können jedoch auch nur Zugriffsinformationen, beispielsweise Hyperlinks, Pfadinformationen, Handles oder dgl. verwendet werden, so dass die konkreten Werte für die Zustandsparameter ZP erst zu einem späteren Zeitpunkt abgerufen (pull) oder übermittelt (push) werden. Der Abruf der Zustandsparameter ZP ist in der Figur 2 mit der Ziffer "2" gekennzeichnet.

Im nächsten Schritt, der in der Figur 2 mit der Ziffer "3" markiert ist, erzeugt die Verwaltungseinrichtung DS einen Simulationsauftrag, der also ein Paket darstellt, welches eine verschlüsselte Version des Simulationsmodells VSM, die Zustandsparameter ZP (oder Verweise dahin), eine Zufallszahl ZZ und eine Gültigkeitsdauer GD ("Expiration Date") umfasst. Der Simulationsauftrag kann weiterhin auch Informationen über die zu verwendende Simulations-Software (Ausführungsumgebung), Bedingungen, Konditionen, Lizenzen und weitere Informationen umfassen.

Selbstverständlich können auch die Zustandsparameter ZP bzw. die Zugriffsinformationen auf die Zustandsparameter ZP verschlüsselt sein. Die Gültigkeitsdauer GD ist erforderlich, um zu vermeiden, dass ein für die Optimierung erforderliches Rechenergebnis zu spät geliefert wird und ein Besitzer einer Ausführungseinheit SC für nicht nutzbare Resultate bezahlt wird.

Die Zufallszahl ZZ und die Gültigkeitsdauer GD werden miteinander kombiniert, wobei eine Funktion zur Erzeugung eines Arbeitsnachweises AW1 ("Proof of Work") verwendet wird. Dieser Arbeitsnachweis AW1 ist beispielsweise ein Hash-Wert, der benötigt wird, um das Arbeitsergebnis derart überprüfen zu können, dass entschieden werden kann, ob ein Auftragnehmer eine zu vergütende Leistung erbracht hat, oder nicht. Die Errechnung dieses Arbeitsnachweises AW1 ist in der Figur 2 mit der Ziffer "4" markiert. Zusammen mit den in der Figur 2 mit der Ziffer "3" zusammengestellten Informationen ergibt sich so ein Simulationsauftrag SA, ein sog. "Smart Contract", wobei im Erfolgsfall, nämlich wenn die seitens der Automatisierungsanordnung erzeugten Arbeitsnachweise AW1 mit den (später beschriebenen) seitens der Auftragnehmer SC (Simulation Client) erzeugten Arbeitsnachweise AW2 übereinstimmen, automatisch (bzw. ggf nach manueller Freigabe oder stichprobenartiger Kontrolle) Zahlungsinformationen ZI für die Auftragnehmer bereitgestellt werden.

Das Informationspaket, welches durch die Verwaltungseinrichtung DS im Schritt "3" erzeugt wurde, wird durch den Auftragnehmer SC (Simulation Client) geladen. Der Download kann entweder manuell ausgelöst werden, oder aber auch automatisch immer dann, wenn ein neues Paket oder neue Zustandsparameter ZP zur Verfügung stehen. Die Ausführungsumgebung des Auftragnehmers SC entschlüsselt das Simulationsmodel SM und die enthaltenen Zustandsparameter ZP bzw., in einer alternativen Ausführungsform, beschafft anhand der enthaltenen Zugriffsinformationen die aktuellen Zustandsparameter ZP. Danach wird die Simulation ausgeführt, um optimierte Steuerungsparameter für die industrielle Anordnung zu generieren. Diese werden der Verwaltungseinrichtung DS zur Verfügung gestellt (Schritt "6"). Grundsätzlich umfasst ein Rechner oder Server des Auftragnehmers eine Ausführungsumgebung bzw. "Engine", um das Simulationsmodell auszuführen, ein Programm zur Entschlüsselung des Simulationsmodels SM und ggf. der Zustandsparameter ZP sowie eine weitere Funktionen, insbesondere einen "Client Account" für das Blockchain-Verfahren, mit dem die Vergütung bzw. Zahlung nach Abschluss des Auftrages verwaltet bzw. transferiert wird.

Sobald die Simulation beendet ist, werden die optimierten Steuerungsparameter vor Ablauf der Gültigkeitsdauer GD ausgeliefert. Aus den erzeugten Daten wird ein Arbeitsnachweis AW2 abgeleitet, der mit dem Sollwert des Arbeitsnachweises AW1 aus Schritt "4" verglichen wird, wobei im positiven Fall die Zahlungsinformation ZI ausgelöst wird. Der dabei erzeugte Arbeitsnachweis AW2 basiert auf der Zufallszahl ZZ und der Gültigkeitsdauer GD. Zusätzliche Voraussetzung für das Auslösen der Zahlungsinformation ZI ist selbstverständlich, dass auch alle anderen Bedingungen erfüllt sind. Zusätzlich kann in dem Fall, in dem eine Mehrzahl von Auftragnehmern ein- und dieselbe Optimierungsaufgabe verrichtet hat, eine gegenseitige Überprüfung der Ergebnisse stattfinden, bevor die optimierten Steuerungsparameter angewendet werden und bevor eine Zahlung ausgelöst wird. Typischerweise übermittelt der Auftragnehmer bzw. dessen Computer SC Kontodaten oder andere Informationen, die ihn als Zahlungsempfänger bestimmen. Alternativ kann auch direkt im "Smart Contract" programmiert sein, dass eine Zahlung ausgelöst wird, insbesondere auch mittels Kryptowährungen.

Schließlich wird die industrielle Automatisierungsanordnung bzw. der zu steuernde Prozess etc. mit Hilfe der optimierten Steuerungsparameter betrieben, wobei ggf. auch eine Freigabe durch einen Anlagenbetreiber abgewartet werden kann.

Als ein Ausführungsbeispiel kann eine Firma betrachtet werden, die Software herstellt und auf Simulationssoftware spezialisiert ist. Diese vertreibt zwei Tools. Ein erstes ist möglicherweise eine Engineering-Software, die es ermöglicht, einen digitalen Zwilling eines Systems einer Fabrik zu erzeugen. Das zweite Tool ist ein frei nutzbarer "Client", der von jedem über das Internet geladen und auf seinen PC, Smartphone, Tablet Computer oder dgl. ausgeführt werden kann.

Ein Betreiber einer Fabrikationseinrichtung produziert möglicherweise jede Woche eine andere Variante desselben Produktes. Er möchte seinen Materialfluss optimieren und die Energieeffizienz seiner Fabrik für jede neue Produktvariante optimieren.

Der Betreiber der Fabrikationseinrichtung kann die Engineering-Software des Software-Unternehmens erwerben und einen digitalen Zwilling als "Simulationsmodell" der zu optimierenden Fabrik bzw. der zu optimierenden Systeme entwickeln. Das Simulationsmodell wird mittels einer Verwaltungseinrichtung gespeichert, die außerdem die Zustandsinformationen bzw. Zustandsparameter der Systeme der Fabrik zugänglich macht. Nachdem der Betreiber definiert hat, welche Resultate er erwartet, publiziert er mittels der Verwaltungseinrichtung DS seine Daten. Aus Sicherheits- und Redundanzgründen erwartet er, dass die Simulation fünfmal von unterschiedlichen Personen bzw. unterschiedlichen Ausführungseinheiten SC ausgeführt wird. Der Betreiber publiziert außerdem, wie viel er für jede Ausführung einer Simulation zu zahlen bereit ist. Dies mündet in einem virtuellen Vertragsangebot, einem sog. "Smart Contract", der unveränderlich festgeschrieben ist, bis die Simulationsarbeit in der geforderten Zeit ausgeführt ist.

Auf der anderen Seite können Besitzer von Computer-Hardware, insbesondere der geschilderten Computer, Server, Smartphones, Tablet-Computer o.ä., die eine frei zugängliche "Client Software" geladen haben, damit eine Benachrichtigung darüber empfangen, dass jemand - in diesem Fall: Betreiber der Fabrik F - Informationen über durchzuführende Arbeit publiziert hat. Der Besitzer der Computer-Hardware kann nun entscheiden, ob er bereit ist, die durchzuführende Arbeit, also die Abarbeitung des Simulationsmodels, für den vorgeschlagenen Preis durchzuführen; diese Entscheidung kann auch automatisch anhand vorgegebener Parameter erfolgen. Sofern er akzeptiert, wird ein verschlüsseltes Paket mit den erforderlichen Informationen geladen, die Simulation wird ausgeführt und die Resultate werden automatisch zurückübermittelt. Ein Arbeitsnachweis AW2 wird erzeugt und der Besitzer bekommt seine Zahlung automatisch, insbesondere mittels eines Blockchain-Kontos bzw. einer Krypto-Währung. Für die Benutzung der Ausführungsumgebung kann eine Gebühr automatisch an den Hersteller bzw. Bereitsteller der Simulations-Software übermittelt werden.

Seitens der Fabrik empfängt der Besitzer bzw. seine Technologie (insbesondere die Verwaltungseinrichtung DS) fünf verschiedene Resultate, von denen beispielsweise vier identisch sind und ein Resultat unterschiedlich. Anhand der Mehrheit der Resultate werden die vier identischen als Steuerungsparameter für die speicherprogrammierbaren Steuerungen PLC verwendet, im vorliegenden Fall zur Optimierung der Energieeffizienz und des Materialflusses.

Weiterhin kann der Hersteller der Software ebenfalls von dem Betreiber der Automatisierungsanordnung eine Vergütung für die Benutzung der Engineeringsoftware und für jede Durchführung einer Simulation eine Gebühr beziehen, die die Entwicklungskosten der Software deckt.

## Patentansprüche

1. Verfahren zur Optimierung eines industriellen Prozesses, insbesondere einer industriellen Automatisierungsaufgabe oder eines industriellen Verfahrens,
wobei der industrielle Prozess oder ein Teil davon mittels eines Simulationsmodells (VSM) abgebildet wird und das Simulationsmodell mittels einer Ausführungsumgebung (SC) ausgeführt wird,
wobei der Ausführungsumgebung (SC) aktuelle Zustandsparameter (ZP) des industriellen Prozesses zur Verfügung gestellt werden, und
wobei bei der Ausführung des Simulationsmodells (VSM) optimierte Steuerungsparameter (OP) für den industriellen Prozess ermittelt und zur Optimierung des industriellen Prozesses verwendet werden,
**dadurch gekennzeichnet,**
**dass** mittels einer Verwaltungseinrichtung (DS) ein Simulationsauftrag erstellt und einer Anzahl potentieller Vertragspartner zur Ausführung angeboten wird,
wobei der Simulationsauftrag (SA) das Simulationsmodell (VSM) und die Zustandsparameter (ZP) umfasst,
**dass** zumindest ein Vertragspartner den Simulationsauftrag (SA) lädt und mittels einer eigenen Ausführungsumgebung (SC) das Simulationsmodell (VSM) unter Verwendung der Zustandsparameter (ZP) ausführt und als Resultat optimierte Steuerungsparameter (OP) an die Verwaltungseinrichtung (DS) zurück übermittelt,
wobei die Verwaltungseinrichtung (DS) die optimierten Steuerungsparameter (OP) zur Optimierung dem industriellen Prozess zur Verfügung stellt.

2. Verfahren nach Patentanspruch 1,
**dadurch gekennzeichnet,**
**dass** der Simulationsauftrag (SA) mittels eines öffentlichen Netzwerkes, insbesondere des Internets, einer formal nicht beschränkten Menge potentieller Vertragspartner zur Ausführung gegen eine Vergütung (ZI) angeboten wird,
wobei der Simulationsauftrag (SA) Informationen über die Vergütung (ZI) und technische Bedingungen, insbesondere eine maximale Ausführungsdauer oder Qualitätsanforderungen, umfasst.

3. Verfahren nach einem der vorherigen Patentansprüche,
**dadurch gekennzeichnet,**
**dass** durch die Verwaltungseinrichtung (DS) eine zur Ausführung des Simulationsauftrags (SA) notwendige Software spezifiziert und/oder den Vertragspartnern zur Verfügung gestellt wird.

4. Verfahren nach einem der vorherigen Patentansprüche,
**dadurch gekennzeichnet,**
**dass** die Übertragung des Simulationsauftrags (SA) zu den Vertragspartnern und die Rückübermittlung der Resultate mittels eines Blockchain-Verfahrens abgesichert wird.

5. Verfahren nach einem der vorherigen Patentansprüche,
**dadurch gekennzeichnet,**
**dass** durch die Verwaltungseinrichtung (DS) nach Empfang und einer Überprüfung des Resultates eine mit dem Simulationsauftrag (SA) in Aussicht gestellte Vergütung (ZI) freigegeben wird.

6. Verfahren nach einem der vorherigen Patentansprüche,
**dadurch gekennzeichnet,**
**dass** das Simulationsmodell (VSM) mit einem Know-how-Schutz geschützt ist,
wobei das Simulationsmodell (VSM) durch eine Anonymisierung, insbesondere durch eine Entfernung von Quellcodeanteilen, derart bearbeitet ist, dass Rückschlüsse auf die konkrete Struktur des zu optimierenden industriellen Prozesses erschwert werden.

7. Verfahren nach einem der vorherigen Patentansprüche,
**dadurch gekennzeichnet,**
**dass** der Simulationsauftrag (SA) parallel an eine Mehrzahl Vertragspartner vergeben wird,
wobei durch die Verwaltungseinrichtung (DS) mittels Vergleich einer Mehrzahl zurückübermittelter Resultate eine Ergebnisüberprüfung durchgeführt wird.

8. Verfahren nach einem der vorherigen Patentansprüche,
**dadurch gekennzeichnet,**
**dass** der Simulationsauftrag (SA) als Zustandsparameter (ZP) zumindest einen Zugriffsparameter, insbesondere eine Adresse und eine Kennung, umfasst, wobei durch die Ausführungsumgebung (SC) im Zuge einer Ausführung des Simulationsmodells (VSM)aktuelle Werte für die Zustandsparameter (ZP) des industriellen Prozesses geladen und für die Ausführung des Simulationsmodells (VSM) verwendet werden.

9. Verfahren nach einem der vorherigen Patentansprüche,
**dadurch gekennzeichnet,**
**dass** eine wiederholte Optimierung zu verschiedenen Zeitpunkten durchgeführt wird, wobei für eine wiederholte Ausführung des Simulationsauftrages (SA) durch ein- und dieselbe Ausführungsumgebung (SC) das mit einer vorherigen Ausführung geladene Simulationsmodell (VSM) weiterverwendet wird und aktualisierte Zustandsparameter (ZP) geladen und verwendet werden.

10. Verwaltungseinrichtung (DS) für eine industrielle Automatisierungsanordnung zur Optimierung eines industriellen Prozesses,
wobei für den industriellen Prozess oder ein Teil davon eine Optimierung mittels eines Simulationsmodells (VSM) vorgesehen ist,
wobei vorgesehen ist, dass das Simulationsmodell (VSM) mittels einer Ausführungsumgebung (SC) ausgeführt wird und dabei aktuelle Zustandsparameter (ZP) des industriellen Prozesses verwendet werden, und
wobei als Resultat der Ausführung des Simulationsmodells (VSM) optimierte Steuerungsparameter (OP) für den industriellen Prozess ermittelt und zur Optimierung des industriellen Prozesses vorgesehen sind,
**dadurch gekennzeichnet,**
**dass** die Verwaltungseinrichtung (DS) dazu eingerichtet ist, einen Simulationsauftrag (SA) zu erstellen und einer Anzahl potentieller Vertragspartner zur Ausführung anzubieten,
wobei der Simulationsauftrag (SA) zumindest das Simulationsmodell (VSM) und die zu verwendenden Zustandsparameter (ZP) umfasst, und
**dass** die Verwaltungseinrichtung (DS) zum Empfang der von einem Vertragspartner mittels einer eigenen Ausführungsumgebung (SC) durch Ausführung des Simulationsmodells (VSM) unter Verwendung der ermittelten Zustandsparameter (ZP) errechneten optimierten Steuerungsparameter (OP) eingerichtet ist,
wobei die Verwaltungseinrichtung (DS) weiter dazu eingerichtet ist, die Anwendung der optimierten Steuerungsparameter (OP) auf den industriellen Prozess zu initiieren.

11. Verwaltungseinrichtung (DS) nach Patentanspruch 10,
**dadurch gekennzeichnet,**
**dass** die Verwaltungseinrichtung (DS) zur Anbietung des Simulationsauftrages mittels eines öffentlichen Netzwerks, insbesondere des Internets, an eine formal nicht beschränkte Menge potentieller Vertragspartner ausgestaltet ist,
wobei der Simulationsauftrag (SA) Informationen über die Vergütung (ZI) und technische Bedingungen, insbesondere eine maximale Ausführungsdauer und/oder Qualitätsanforderungen, umfasst.

12. Verwaltungseinrichtung (DS) nach einem der Patentansprüche 10 oder 11,
**dadurch gekennzeichnet,**
**dass** die Verwaltungseinrichtung (DS) dazu eingerichtet ist, eine zur Ausführung des Simulationsauftrags (SA) notwendige Software zum Spezifizieren und/oder den Vertragspartnern zur Verfügung zu stellen.

13. Verwaltungseinrichtung (DS) nach einem der Patentansprüche 10 bis 12,
**dadurch gekennzeichnet,**
**dass** die Verwaltungseinrichtung (DS) dazu eingerichtet ist, die Übertragung des Simulationsauftrages (SA) zu den Vertragspartnern und die Rückübermittlung der Resultate mittels eines Block-Chain-Verfahrens abzusichern.

14. Verwaltungseinrichtung (DS) nach einem der Patentansprüche 10 bis 13,
**dadurch gekennzeichnet,**
**dass** die Verwaltungseinrichtung (DS) dazu eingerichtet ist, nach Empfang und einer Überprüfung des Resultates eine mit dem Simulationsauftrag (SA) in Aussicht gestellte Vergütung (ZI) freizugeben.

15. Verwaltungseinrichtung (DS) nach einem der Patentansprüche 10 bis 14,
**dadurch gekennzeichnet,**
**dass** die Verwaltungseinrichtung (DS) dazu eingerichtet ist, den Simulationsauftrag (SA) parallel an eine Mehrzahl an Vertragspartnern zu vergeben,
wobei die Verwaltungseinrichtung (DS) weiter dazu eingerichtet ist, mittels Vergleiches einer Mehrzahl übermittelter Resultate eine Ergebnisüberprüfung durchzuführen.
